# DEMANDE DE BREVET EUROPEEN

(11) **EP 2 042 695 A1**
(43) Date de publication de la demande: **01.04.2009**
(21) Numéro de dépôt: 08305600.2
(22) Date de dépôt: 26.09.2008
(51) Int. Cl.: F01N 3/025, F01N 3/20, F01N 3/36, F01N 7/00, F01N 7/08

(54) **Ligne d'échappement comportant un conduit muni d'un support commun d'injecteur et de sonde**

(30) Priorité: 28.09.2007 FR 0757920
(71) Demandeur: Renault S.A.S., 92100 Boulogne-Billancourt (FR)
(72) Inventeur: Hottebart, Pascal, 95610 Eragny-sur-Oise (FR)

(57) **Abrégé**

L'invention propose une ligne d'échappement pour un véhicule automobile comportant au moins un conduit (12), qui est relié en amont à un moteur thermique du véhicule et en aval à un dispositif de dépollution, qui comporte des moyens de fixation d'une sonde à oxygène (20), destinée à permettre l'analyse des gaz d'échappement, et qui comporte des moyens de fixation d'un injecteur (22) de carburant, destiné à injecter du carburant dans la ligne d'échappement en amont du dispositif de dépollution pour en améliorer l'efficacité, **caractérisée en ce que** les moyens de fixation de la sonde à oxygène (20) et les moyens de fixation de l'injecteur (22) comportent un support commun (26), recevant la sonde à oxygène (20) et l'injecteur (22) de carburant.

## Description

L'invention concerne une ligne d'échappement pour un véhicule automobile.

L'invention concerne plus particulièrement une ligne d'échappement pour un véhicule automobile comportant au moins un conduit, qui est relié en amont à un moteur thermique du véhicule et en aval à un dispositif de dépollution, qui comporte des moyens de fixation d'une sonde à oxygène, destinée à permettre l'analyse des gaz d'échappement, et qui comporte des moyens de fixation d'un injecteur de carburant, destiné à injecter du carburant dans la ligne d'échappement en amont du dispositif de dépollution pour en améliorer l'efficacité.

On connaît de nombreux exemples de lignes d'échappement de ce type.

Conventionnellement, une telle ligne d'échappement comporte un conduit qui comporte d'une part un bossage spécifique destiné à recevoir une sonde à oxygène, et d'autre part une excroissance venue de matière avec le conduit, dont un perçage communique avec l'intérieur du conduit, et dont une face sensiblement plane, dans laquelle débouche ledit perçage, est usinée pour former une semelle réceptrice destinée à recevoir une platine porteuse d'un injecteur de carburant.

Cette configuration est peu avantageuse car, du fait de la place restreinte qui est accordée à la sonde à oxygène et à l'injecteur de carburant, le montage de ces deux éléments indépendamment l'un de l'autre s'avère souvent malaisé.

Par ailleurs, le montage indépendant de ces deux éléments grève le coût de fabrication d'un tel conduit d'échappement.

L'invention remédie à cet inconvénient en proposant un conduit d'échappement qui intègre en un seul support la sonde oxygène et l'injecteur de carburant.

Dans ce but, l'invention propose une ligne d'échappement du type décrit précédemment, caractérisé en ce que les moyens de fixation de la sonde à oxygène et les moyens de fixation de l'injecteur comportent un support commun, recevant la sonde à oxygène et l'injecteur de carburant.

Selon d'autres caractéristiques de l'invention :
- une paroi du conduit d'échappement porte sur sa périphérie une semelle comportant au moins un orifice destiné à mettre en communication la sonde à oxygène et l'injecteur avec l'intérieur du conduit et ladite semelle reçois une platine commune, formant le support commun, porteuse de la sonde à oxygène et de l'injecteur,
- la platine comporte un premier perçage recevant l'injecteur et un deuxième perçage recevant la sonde à oxygène,
- la semelle comporte un troisième perçage coïncidant avec le premier perçage de la platine et un quatrième perçage coïncidant avec le deuxième perçage de la platine,
- la semelle est venue de matière avec le matériau du conduit,
- une face plane de la platine, dans laquelle débouchent les premier et deuxième perçages, est fixée sur une face plane de la semelle dans laquelle débouchent les troisième et quatrième perçages par l'intermédiaire de vis qui traversent la platine et sont reçues dans la semelle, avec interposition d'un joint d'étanchéité entre les deux faces planes,
- le conduit est relié en amont à une semelle d'un turbocompresseur équipant le moteur du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un conduit d'échappement selon un état antérieur de la technique ;
- la figure 2 est une vue en perspective d'un conduit d'échappement réalisé selon l'invention ;
- la figure 3 est une vue en coupe du conduit d'échappement de la figure 2.

Dans la description qui va suivre, des chiffres de référence identiques désignent des pièces identiques ou ayant des fonctions similaires.

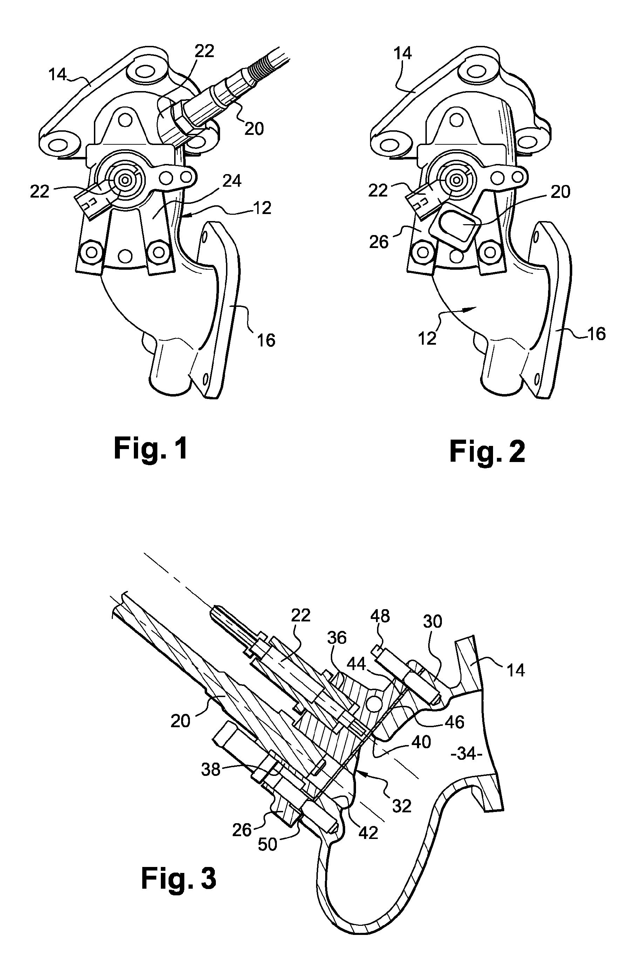

On a représenté à la figure 1 une partie d'une ligne d'échappement pour un véhicule automobile comportant un dispositif de dépollution (non représenté), par exemple un catalyseur ou un filtre à particules.

De manière connue, la ligne d'échappement comporte au moins un conduit 12, dont une extrémité amont 14 est reliée à un moteur thermique (non représenté) du véhicule et dont une extrémité aval 16 est reliée au dispositif de dépollution.

Conventionnellement, le conduit d'échappement 12 comporte des moyens de fixation d'une sonde 20 à oxygène qui est destinée à permettre l'analyse des gaz d'échappement.

Ces moyens comportent par exemple un bossage 22, venu de matière avec le matériau du conduit 12, dans lequel est pratiqué à un taraudage (non représenté) dans lequel est vissé un filetage complémentaire de la sonde 20 à oxygène.

Le conduit 12 comporte par ailleurs des moyens de fixation d'un injecteur 22 de carburant, qui est destiné à injecter du carburant dans la ligne d'échappement en amont du dispositif de dépollution pour en améliorer l'efficacité.

Ces moyens comportent par exemple une platine 24 qui est reçue sur une semelle complémentaire (non représenté) venue de matière avec le conduit 12 et usinée en conséquence. L'injecteur 22 est fixé sur la platine 24.

Cette conception pose de nombreux problèmes de d'encombrement et de fabrication car il est nécessaire de prévoir sur le conduit 12 d'une part des formes de fonderie pour former le bossage 22 et la semelle de réception de la platine 24, et car d'autre part il est nécessaire de réaliser un taraudage dans le bossage 22 et un usinage de la semelle pour former une face plane susceptible de recevoir la platine 24.

L'invention remédie à cet inconvénient en proposant un support commun pour la sonde oxygène 20 et l'injecteur 22.

Dans ce but, l'invention propose une ligne d'échappement du type décrit précédemment, **caractérisée en ce que**, comme l'illustrent les figures 2 et 3, les moyens de fixation de la sonde à oxygène 20 et les moyens de fixation de l'injecteur 22 comportent un support commun 26, recevant la sonde à oxygène 20 et l'injecteur 22 de carburant.

Tout moyen connu de l'état de la technique peut être utilisé pour la mise en oeuvre de l'invention. Toutefois, dans le mode de rédaction préféré de l'invention, comme l'illustre la figure 3, une paroi 28 du conduit d'échappement porte sur sa périphérie une semelle 30 comportant au moins un orifice 32 destiné à mettre en communication la sonde à oxygène 20 et l'injecteur 22 avec l'intérieur 34 du conduit 12. La semelle 30 reçoit par ailleurs une platine commune 26, formant le support commun, qui est porteuse de la sonde à oxygène 20 et de l'injecteur 22.

Dans le mode de réalisation préféré de l'invention, l'orifice 32 formé dans la platine 26 communique avec un premier perçage 36 recevant l'injecteur 22 et un deuxième perçage 38 recevant la sonde à oxygène 20.

De surcroît, cette communication est effectuée par l'intermédiaire d'un troisième perçage 40 formé dans la semelle 30, qui coïncide avec le premier perçage 36 de la platine 26, et par l'intermédiaire d'un quatrième perçage 42 formé dans la semelle 30 qui coïncide avec le deuxième perçage 38 de la platine 26.

Dans le mode de réalisation préférée de l'invention, la semelle 30 est venue de matière avec le matériau du conduit 12. En particulier, la semelle 30 est obtenue lors du moulage du conduit 12 puis elle est usinée afin de recevoir la platine 26.

Cette configuration n'est pas limitative de l'invention, et on pourrait concevoir que la platine 26 soit soudée sur un conduit 12 en tôle réalisé par cintrage.

Ainsi, une face plane 44 de la platine 26, dans laquelle débouchent les premier et deuxième perçages 36 et 38, est fixée sur une face plane 46 de la semelle 30 dans laquelle débouchent les troisième et quatrième perçages 40 et 42 par l'intermédiaire de vis 48 qui traversent la platine 26 et sont reçues dans la semelle 30.

Pour assurer une bonne étanchéité de l'ensemble, un joint d'étanchéité 50 est interposé entre les faces planes 44 et 46.

On remarquera que le conduit 12 peut être destiné à voir son extrémité amont 14 fixée directement à une semelle d'un turbocompresseur du véhicule. Dans cette configuration, le conduit 12 sera réalisé de préférence par un processus de fonderie, de manière à résister à l'intense chaleur dégagée par le turbocompresseur associé lors de son fonctionnement.

## Revendications

1. Ligne d'échappement pour un véhicule automobile comportant au moins un conduit (12), qui est relié en amont à un moteur thermique du véhicule et en aval à un dispositif de dépollution, qui comporte des moyens de fixation d'une sonde à oxygène (20), destinée à permettre l'analyse des gaz d'échappement, et qui comporte des moyens de fixation d'un injecteur (22) de carburant, destiné à injecter du carburant dans la ligne d'échappement en amont du dispositif de dépollution pour en améliorer l'efficacité,
**caractérisée en ce que** les moyens de fixation de la sonde à oxygène (20) et les moyens de fixation de l'injecteur (22) comportent un support commun (26), recevant la sonde à oxygène (20) et l'injecteur (22) de carburant.

2. Ligne d'échappement selon la revendication précédente, **caractérisée en ce qu'**une paroi (28) du conduit d'échappement porte sur sa périphérie une semelle (30) comportant au moins un orifice (32) destiné à mettre en communication la sonde à oxygène (20) et l'injecteur (22) avec l'intérieur du conduit (34) et **en ce que** ladite semelle (30) reçoit une platine commune (26), formant le support commun, porteuse de la sonde à oxygène (20) et de l'injecteur (22).

3. Ligne d'échappement selon la revendication précédente, **caractérisée en ce que** la platine (26) comporte un premier perçage (36) recevant l'injecteur (22) et un deuxième perçage (38) recevant la sonde à oxygène (20).

4. Ligne d'échappement selon l'une des revendications 2 ou 3, **caractérisée en ce que** la semelle (30) comporte un troisième perçage (40) coïncidant avec le premier perçage (36) de la platine (26) et un quatrième perçage (42) coïncidant avec le deuxième perçage (38) de la platine (26).

5. Ligne d'échappement selon l'une des revendications précédentes, **caractérisée en ce que** la semelle (30) est venue de matière avec le matériau du conduit (12).

6. Ligne d'échappement selon l'une des revendications précédentes, **caractérisée en ce qu'**une face plane (44) de la platine (26), dans laquelle débouchent les premier et deuxième perçages (36, 38), est fixée sur une face plane (46) de la semelle (30) dans laquelle débouchent les troisième et quatrième perçages par l'intermédiaire de vis (48) qui traversent la platine (26) et sont reçues dans la semelle (30), avec interposition d'un joint (50) d'étanchéité entre les deux faces planes (44, 46).

7. Ligne d'échappement selon l'une quelconque des revendications précédentes, **caractérisée en ce que** le conduit (12) est relié en amont à une semelle d'un turbocompresseur équipant le moteur du véhicule.
